# EUROPÄISCHE PATENTANMELDUNG

(11) **EP 0 793 052 A1**
(43) Veröffentlichungstag der Anmeldung: **03.09.1997**
(21) Anmeldenummer: 97101307.3
(22) Anmeldetag: 29.01.1997
(51) Int. Cl.: F16L 59/02

(54) **Verkleidung zur Wärmedämmung beliebig geformter heisser Teile**

(30) Priorität: 01.03.1996 DE 19607760
(71) Anmelder: Elring Klinger GmbH, 72581 Dettingen (DE)
(72) Erfinder: Schmenkel, Olaf, 72555 Metzingen (DE); Schenk, Peter, 72531 Hohenstein (DE)
(74) Vertreter: Möbus, Daniela, Dr.-Ing.

(57) **Zusammenfassung**

Eine Verkleidung für beliebig geformte heiße Teile mit einer diese Teile mindestens teilweise umschließenden Dämmschicht (11) aus einem schlecht wärmeleitfähigen Material und einer darauf aufgebrachten flexiblen Schutzschicht (12) gegen Feuchtigkeit sowie chemische und mechanische Beanspruchung.

## Beschreibung

Die Erfindung betrifft eine Verkleidung zur Wärmedämmung beliebig geformter heißer Teile, insbesondere von abgasführenden Teilen in Kraftfahrzeugen.

Im Motorraum von Kraftfahrzeugen mit Verbrennungsmotoren gehören die abgasführenden Bauteile zu den am heißesten werdenden Elementen. Zum Schutz insbesondere von temperaturempfindlichen elektronischen Bauteilen im Motorraum ist daher eine Vermeidung einer zu großen Wärmeabstrahlung dieser Teile erforderlich. Bei Fahrzeugen mit Katalysatoren ist außerdem das Halten der Abgase auf hoher Temperatur wünschenswert, da dann der Katalysator schon relativ früh nach Starten des Motors seine Wirkung entfalten kann. Dieser Vorteil gewinnt insbesondere vor dem Hintergrund verschärfter Abgasnormen an Bedeutung.

Zur Wärmedämmung von Auspuffanlagen in Kraftfahrzeugen wurden seither Blech- oder Kunststoff-Formteile verwendet, die auf ihrer Innenseite mit einer Wärmedämmschicht versehen waren. Das Herstellen dieser Blech- oder Kunststoff-Formteile erfolgt in Tiefziehformen und ist damit relativ teuer und aufwendig. Für jedes zu verkleidende Teil muß eine gesonderte Form hergestellt werden. Bei Verwendung von Blech-Formteilen, die durch Schweißen aneinander befestigt werden, entsteht außerdem der Nachteil, daß die Schweißstellen korrosionsanfällig und bezüglich der Dauerhaltbarkeit problematisch sind.

Der vorliegenden Erfindung liegt die Aufgabe zugrunde, eine wirkungsvolle Verkleidung für heiße Teile zu schaffen, die fertigungstechnisch einfacher und preisgünstiger herzustellen ist.

Die Aufgabe wird mit einer Verkleidung der eingangs genannten Art gelöst, die erfindungsgemäß durch eine die zu verkleidenden Teile mindestens teilweise umschließende Dämmschicht aus einem schlecht wärmeleitfähigen Material und einer darauf aufgebrachten flexiblen Schutzschicht gekennzeichnet ist. Dabei kann die Dämmschicht in an sich bekannter Weise aus einem anorganischen Fasermaterial bestehen, das sich durch extreme Hitzebeständigkeit auszeichnet. Die flexible Schutzschicht ersetzt die seither verwendeten Blech- oder Kunststoff-Formteile. Sie hat die gleiche Funktion wie diese, nämlich Schutz der Wärmedämmschicht vor Feuchtigkeit sowie mechanischer und chemischer Beanspruchung beispielsweise durch Streusalz, Motoröl oder dergleichen. Die flexible Schutzschicht läßt sich leicht auch sehr kompliziert geformten Teilen anpassen. Die Fertigung der Verkleidung wird hierdurch sehr einfach und kostengünstig. Dabei bietet die erfindungsgemäße Verkleidung nicht nur im Automobilbereich Vorteile, sondern kann auch zur Wärmedämmung im chemischen Anlagenbau eingesetzt werden. Als Schutzschicht kann vorzugsweise ein hochtemperaturbeständiger Silikonkautschuk verwendet werden. Für eine besonders einfache Handhabung der Verkleidung kann die Dämmschicht als eine einseitig mit einer die Schutzschicht bildenden Beschichtung versehene Matte ausgebildet sein. Diese Matte kann dann entsprechend den zu verkleidenden heißen Teilen zugeschnitten, aufgebracht und anschließend mit Hilfe von Spangen oder dergleichen oder auch einer Klebverbindung an den Teilen befestigbar sein. Für die Fertigung dieser Matte empfiehlt sich das Aufbringen der Schutzschicht durch eine Walzenbeschichtung.

Als Alternative zur Ausbildung der Dämmschicht in Form einer Matte kann diese auch aus einer plastischen Masse bestehen, die auf die zu verkleidenden Teile aufbringbar und anschließend von außen mit der Schutzschicht versehbar ist. Dabei kann die Masse, die beispielsweise anorganische Fasern und ein hochtemperaturbeständiges, rasch aushärtendes Bindemittel beinhalten kann, auf die zu verkleidenden Teile aufgestrichen oder auch aufgespritzt werden. Auch die Schutzschicht kann in flüssiger Form auf die Masse aufsprühbar sein und anschließend trocknen oder vernetzen. Bei einer derartigen Ausgestaltung der Verkleidung sind gesonderte Befestigungsmittel für die Verkleidung überflüssig. Nach dem Aushärten der Dämmschicht sowie Trocknen oder Vernetzen der Schutzschicht hält die Verkleidung von selbst an den zu verkleidenden Teilen.

Nachfolgend werden bevorzugte Ausführungsbeispiele von erfindungsgemäßen Verkleidungen anhand der Zeichnung näher erläutert.

Es zeigen:
- Fig. 1: einen Querschnitt durch eine Verkleidung in Form einer Matte mit einseitiger Beschichtung;
- Fig. 2: einen Querschnitt durch ein Abgasrohr mit einer zweiten Ausführungsform einer erfindungsgemäßen Verkleidung.

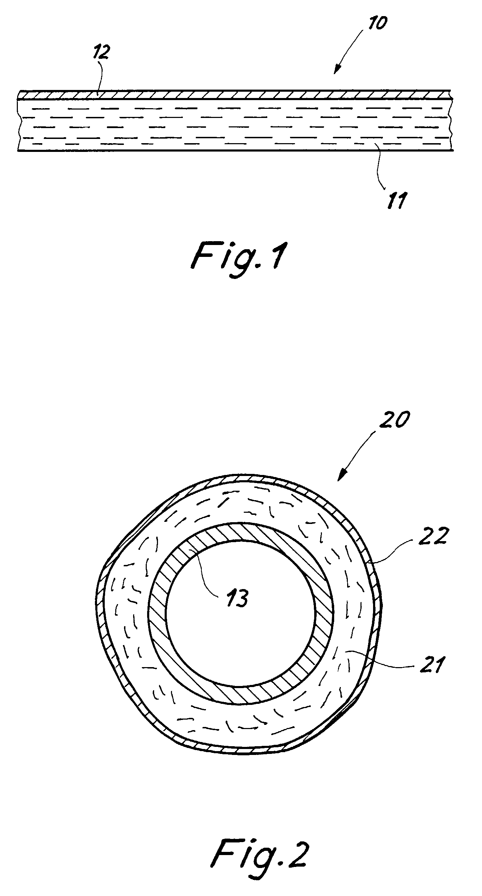

Fig. 1 zeigt eine Matte 10, die eine wärmedämmende Schicht in Form eines Vlieses aus anorganischen Fasern 11 aufweist. Die wärmedämmende Schicht 11 ist einseitig mit einer Silikonkautschuk-Schutzschicht 12 versehen, die in einem Walzenbeschichtungsverfahren auf das Vlies 11 aufgebracht worden ist. Die Schutzschicht 12 ist elastisch und hochtemperaturbeständig. Mit der Matte 10 nach Fig. 1 kann beispielsweise ein Abgasrohr umwickelt werden. Zur Fixierung der Matte 10 können eine Klebverbindung zwischen dem zu verkleidenden Teil und der Matte 10 oder aber Spangen oder Klammern oder dergleichen eingesetzt werden.

In Fig. 2 ist eine andere Möglichkeit der Wärmedämmung eines Abgasrohres 13 gezeigt. Die Verkleidung 20 wird hier von einer zunächst plastischen, dann aushärtenden Dämmschicht 21 gebildet, die auf ihrer Außenseite von einer Schutzschicht 22 umhüllt ist. Die Dämmschicht 21 besteht aus hochtemperaturbeständigen Fasern und einem hitzebeständigen Bindemittel. Sie kann auf das Abgasrohr 13 aufgestrichen oder auch aufgespritzt werden. Nach dem Aushärten der Dämmschicht 21 wird auf ihre äußere Oberfläche die Schutzschicht 22 aufgesprüht. Diese kann wie die Schutzschicht 12 aus Fig. 1 aus einem schnell vernetzenden Einkomponenten-Silikonkautschuk bestehen. Die Verkleidung 20 nach Fig. 2 ist selbsthaftend. Hierdurch ist es möglich, bereits mit dieser Verkleidung versehene Auspuffrohre oder dergleichen industriell vorzufertigen und in dieser Form in das Fahrzeug einzubauen.

## Patentansprüche

1. Verkleidung zur Wärmedämmung beliebig geformter heißer Teile, insbesondere von abgasführenden Teilen in Kraftfahrzeugen, gekennzeichnet durch eine die zu verkleidenden Teile (13) mindestens teilweise umschließenden Dämmschicht (11, 21) aus einem schlecht wärmeleitfähigen Material und einer darauf aufgebrachten flexiblen Schutzschicht (12, 22).

2. Verkleidung nach Anspruch 1, dadurch gekennzeichnet, daß die Dämmschicht (11, 21) aus einem anorganischen Fasermaterial besteht.

3. Verkleidung nach Anspruch 1 oder 2, dadurch gekennzeichnet, daß die Schutzschicht (12, 22) vorzugsweise aus einem hochtemperaturbeständigen Silikonkautschuk besteht.

4. Verkleidung nach einem der Ansprüche 1 bis 3, dadurch gekennzeichnet, daß die Dämmschicht (11) als eine einseitig mit einer die Schutzschicht (12) bildenden Beschichtung versehene Matte (10) ausgebildet ist.

5. Verkleidung nach Anspruch 4, dadurch gekennzeichnet, daß die Matte (10) einen die zu verkleidenden Teile angepaßten Zuschnitt aufweist und mit diesen verklebbar oder durch Spangen oder dergleichen an diesen befestigbar ist.

6. Verkleidung nach Anspruch 4 oder 5, dadurch gekennzeichnet, daß die Schutzschicht (12) durch eine Walzenbeschichtung auf die Dämmschicht (11) aufgebracht ist.

7. Verkleidung nach einem der Ansprüche 1 bis 3, dadurch gekennzeichnet, daß die Dämmschicht (21) aus einer plastischen Masse besteht, die auf die zu verkleidenden Teile aufbringbar und anschließend von außen mit der Schutzschicht (22) versehbar ist.

8. Verkleidung nach Anspruch 7, dadurch gekennzeichnet, daß die Masse (21) anorganische Fasern sowie ein hochtemperaturbeständiges und rasch aushärtendes Bindemittel enthält.

9. Verkleidung nach Anspruch 7 oder 8, dadurch gekennzeichnet, daß die Masse (21) auf die zu verkleidenden Teile (13) aufspritzbar ist.

10. Verkleidung nach einem der Ansprüche 7 bis 9, dadurch gekennzeichnet, daß die Schutzschicht (22) in flüssiger Form auf die Dämmschicht (21) aufsprühbar ist und anschließend trocknet oder vernetzt.
